# EUROPEAN PATENT APPLICATION

(11) **EP 4 535 353 A1**
(43) Date of publication of application: **09.04.2025**
(21) Application number: 23201696.4
(22) Date of filing: 04.10.2023
(51) Int. Cl.: G10L 21/10, G06F 40/109, G10L 25/48, H04N 5/445, G10L 15/26, G10L 25/30, G10L 21/06, G10L 25/63

(54) **METHOD AND APPARATUS FOR RENDERING AUDIO DATA USING ADAPTIVE FONTS**

(71) Applicant: Merkel, Frederik, 65183 Wiesbaden (DE)
(72) Inventor: Merkel, Frederik, 65183 Wiesbaden (DE); Schwirtlich, Tim, Chicago, 60618 (US); Langendörfer, Paul Leo, 60599 Frankfurt am Main (DE); Dietrich, Tabea, 67273 Weisenheim am Berg (DE); Wagner-Görmar, Paula, 60594 Frankfurt am Main (DE)
(74) Representative: Valvoda, Jakob

(57) **Abstract**

The disclosure relates to methods, devices, systems and media for providing and using an adaptive font to convey oral characteristics of utterances comprised in audio data in a transcript of the utterances. For instance, a method may comprise obtaining audio data, obtaining textual information transcribing an utterance comprised in the audio data, determining for the utterance, using a trained model, a plurality of feature parameters associated with a plurality of vocal features, determining an adaptive font based on the plurality of feature parameters, and formatting at least a part of the textual information using the adaptive font for display to a user. The plurality of features parameters may be peculiar to the utterance. Various techniques are disclosed to determine the adaptive font based on the plurality of feature parameters.

## Description

### TECHNICAL FIELD

The disclosure relates to audio-visual processing, and particularly to techniques for conveying oral characteristics of utterances comprised in audio data in a transcript of the utterances and associated methods, devices, systems, and media.

### BACKGROUND

Text, although being one of our most crucial communication means, is typically less suitable than voice and/or images for conveying paralinguistic signals such as emotions as it simply conveys information in writing. This drawback becomes even more apparent when transcribing vocal content (e.g., speech) into text to obtain a transcript or a translation of it, typically in plaintext. While persons reading subtitles are still able to experience oral characteristics of vocal content of a movie by hearing the spoken utterance, such as prosodic features (e.g. loudness, speech rate, voice intonation), linguistic features (e.g. accent) and paralinguistic features (e.g. mood, temper), deaf or hard-of-hearing persons are in contrast deprived of these features when reading the same subtitles. When relying on mere plaintext transcripts to understand any vocal content, significant parts of communications could be systematically missed, thereby unduly impacting and limiting understanding and interaction with surroundings and diverse audiovisual material.

### SUMMARY

It is an object of the present disclosure to enable access to original content of vocal content in full, even in environments without or with limited access to the audio content, or for deaf or hard-of-hearing persons, i.e. not only the informational literal content of the audio information but also its oral characteristics such as its prosodic features (like loudness, speech rate, pitch), its linguistic or phonetical content (like language type or style, particular accents), and/or its paralinguistic content (like emotions such as anger, joy, fear and/or grief). This is solved by the subject-matter of the independent claims.

Some embodiments of the invention particularly aim at augmenting transcriptions of vocal content by automatically adapting a font used for the transcript to further convey the oral characteristics of the vocal content which are typically missing in a plaintext transcript. Such an automatic font adaptation can be performed by automatically determining and using, for textual information transcribing an utterance comprised in obtained audio data, an adaptive font which visually adapts based on determined one or more vocal aspects of the utterance. For instance, a plurality of feature parameters associated with a plurality of vocal features can be determined for the utterance, and particularly using a trained model. Based on the plurality of feature parameters, the adaptive font can be determined and used to format at least one part of the textual information. Such resulting formatted textual information may be then displayed to a user. For instance, in the case of textual information being subtitles, such formatted subtitles may be displayed simultaneously with an associated video.

In a first aspect of the disclosure, there is provided a computer-implemented method, comprising obtaining audio data, obtaining textual information transcribing an utterance comprised in the audio data, determining for the utterance, using a trained model, a plurality of feature parameters associated with a plurality of vocal features, determining an adaptive font based on the plurality of feature parameters, wherein at least one aspect of the adaptive font is adapted based on at least one of the plurality of feature parameters, and formatting at least a part of the textual information using the adaptive font for display to a user.

In a preferred embodiment, the utterance is particularly characterized by the plurality of features parameters. They may be peculiar to the utterance. For example, any of the plurality of feature parameters may correspond to an indication of a relevance of its associated vocal feature for the utterance, e.g., whether the associated vocal feature is particularly exhibited in the utterance.

In an embodiment, the plurality of feature parameters may comprise one or more paralinguistic parameters associated with one or more paralinguistic features, one or more phonetical parameters associated with one or more phonetical features, and/or one or more voice parameters associated with one or more voice characteristics.

For instance, the one or more paralinguistic parameters may comprise one or more parameters associated with one or more candidate emotions, each representing an estimation indicating whether the utterance exhibits a respective candidate emotion.

Moreover, in an embodiment, the one or more phonetical parameters may relate to linguistic characteristics comprising one or more of: a parameter indicating a detected language of the utterance, a parameter indicating a detected accent of the utterance, one or more confidence levels for one or more candidate languages, each indicating a confidence level that the utterance is in a respective candidate language, and/or one or more confidence levels associated with one or more candidate accents, each indicating a confidence level that the utterance exhibits a respective candidate accent.

Furthermore, in another embodiment, the one or more voice parameters associated with the one or more voice characteristics comprises one or more of: a parameter indicating a loudness level of the utterance, a parameter indicating a speech rate of the utterance, and/or a parameter indicating a pitch of the utterance.

In a preferred embodiment, the plurality of feature parameters may be stored as a plurality of values of a vector, preferably stored in an array or a matrix.

According to an embodiment, the method may further comprise identifying one or more significant vocal features for the utterance based on the plurality of feature parameters, wherein the one or more significant vocal features and the one or more respective determined feature parameters in the plurality of feature parameters are representative of the utterance, wherein determining the adaptive font based on the plurality of feature parameters comprises determining the adaptive font based on the one or more determined feature parameters of the one or more significant vocal features.

According to this embodiment, the plurality of vocal features may be further categorized according to a plurality of vocal feature categories, and wherein identifying the one or more significant vocal features for the utterance based on the plurality of feature parameters may comprise determining, in each category of the plurality of vocal feature categories, a dominant vocal feature, and selecting the one or more significant vocal features among the determined dominant vocal features for the plurality of vocal feature categories.

Moreover, in a preferred embodiment, the one or more significant vocal features may be associated with one or more respective predetermined types of adaptations, wherein determining the adaptive font based on the one or more determined feature parameters of the one or more significant vocal features may comprise applying the one or more predetermined types of adaptations based on the one or more determined feature parameters of the one or more significant vocal features. Accordingly, this may define a dedicated types of adaptations progressively applicable according to the determined feature parameters of the one or more significant vocal features.

According to a particularly preferred embodiment, the method further comprises determining, for each significant vocal feature of the one or more significant vocal features, an application factor of the predetermined type of adaptation for the significant vocal feature based on the determined feature parameter associated with the significant vocal feature, wherein applying the one or more predetermined types of adaptations based on the one or more determined feature parameters of the one or more significant vocal features comprises applying the one or more predetermined types of adaptations to a predefined font in proportions correlated with the application factors of the one or more predetermined types of adaptations to generate the adaptive font. For instance, this correlation may be positive, negative, linear, or logarithmic.

According to this embodiment, for each significant vocal feature of the one or more significant vocal features, the application factor of the respective predetermined type of adaptation may be itself correlated with the determined feature parameter of the significant vocal feature. This may be a proportional correlation or any other kind of correlation. In an embodiment, this may involve a mapping operation.

Still according to this embodiment, for each significant vocal feature of the one or more significant vocal features, the application factor of the respective predetermined type of adaptation may be on a respective scale having a minimum value and a maximum value, the minimum value indicating a first degree (e.g. a minimum degree) of application of the predetermined type of adaptation and the maximum value a second degree (e.g a maximum degree) of application of the predetermined type of adaptation.

In this embodiment, the predefined font may particularly be a variable font having on or more aspects progressively adaptable. For instance, the one or more application factors for the one or more predetermined types of adaptations may be one or more weights impacting the application of the one or more predetermined types of adaptations. This embodiment enables a particular accurate provision of an augmentation faithfully reflecting the one or more determined feature parameters of the one or more significant vocal features.

According to another embodiment, determining the adaptive font based on the plurality of feature parameters may comprise selecting a proxy font from a plurality of proxy fonts as the adaptive font based on the plurality of feature parameters. For instance, the plurality of proxy fonts may correspond to a plurality of predetermined fonts and each font of the plurality of proxy fonts may be associated with a respective set of predetermined values for the feature parameters for the plurality of vocal features. Accordingly, in an embodiment, selecting the proxy font from the plurality of proxy fonts as the adaptive font based on the plurality of feature parameters may comprise selecting the proxy font from the plurality of proxy fonts, the set of predetermined values of which is the closest to the plurality of feature parameters.

Alternatively, still in this other embodiment, the plurality of proxy fonts may correspond to a plurality of predetermined fonts generated at least for a range of discrete values for each of the one or more feature parameters of the one or more significant vocal features, wherein each proxy font is associated with a particular combination of discrete values forming a respective set of proxy coordinates. In this case, selecting the proxy font from the plurality of proxy fonts as the adaptive font based on the plurality of feature parameters may comprise selecting the proxy font from the plurality of proxy fonts, the set of proxy coordinates of which is the closest to the one or more determined feature parameters of the one or more significant vocal features.

According to yet another embodiment, determining the adaptive font based on the plurality of feature parameters may comprise generating the adaptive font using a further trained model and based on the plurality of feature parameters. For instance, the further trained model may be a model trained on a set of labelled fonts each representative of some particular vocal features to determine reference associations between a set of combinations of values for the plurality of feature parameters and respective sets of derived reference fonts. Using this further trained model, generating the adaptive font using the further trained model and based on the plurality of feature parameters may comprise generating the adaptive font based on the plurality of feature parameters and the reference associations.

Specifically, the step of generating the adaptive font based on the plurality of feature parameters and the reference associations may particularly comprise applying, to one or more fonts from the set of derived reference fonts: one or more adaptations of one or more microtypographical aspects or one or more microtypographical elements, one or more adaptations of one or more macrotypographical aspects or one or more macrotypographical elements, one or more adaptations of one or more display characteristics or one or more display elements; and one or more adaptations of one or more dynamic characteristics. According to this technique, a particularly adaptive font may be generated using a wide range of types of font adaptations.

In this yet other embodiment, generating the adaptive font based on the plurality of feature parameters and the reference associations may comprise generating the adaptive font based on the plurality of feature parameters and the reference associations and using either a stable diffusion process or a character skeleton mapping process, thereby enabling accurate and swift generation of the adaptive font.

According to a further embodiment, determining the adaptive font based on the one or more determined feature parameters of the one or more significant vocal features may alternatively comprise applying one or more custom types of adaptations to a custom font based on the one or more determined feature parameters of the one or more significant vocal features. For instance, the custom font may correspond to a font that has been customized to have a predefined look, for being particularly representative of e.g. a group of persons, an organization, a company or a brand. In an embodiment, the one or more custom types of adaptations may be defined according to one or more custom rules for the custom font, e.g. embodied in a custom modifying algorithm or developed in advance for said custom font. In an embodiment, the one or more custom rules may be configured to limit the application of the one or more custom types of adaptations to maintain an overall look of the custom font.

In many of the above embodiments, the predefined font, the plurality of proxy fonts, the set of labelled fonts, set of derived reference fonts or the custom font may be obtained from a font source. The fonts provided by the font source may comprise fonts configured to illustrate specific vocal features or combinations of vocal features, e.g. configured to be representative of a specific vocal feature or a particular combination of vocal features. They may correspond to empirically developed fonts or to fonts developed using Artificial Intelligence. In some examples, the font source may be a repository of fonts, e.g. a storage (local or remote) of fonts.

In some of the preceding embodiments, the utterance is a unit of speech (e.g. a vocal statement or a sentence), the plurality of feature parameters associated with the plurality of vocal features determined for the utterance may correspond to a first plurality of feature parameters, and the method may further comprise: determining one or more subunits of speech in the unit of speech having a second respective plurality of feature parameters substantially deviating from the first plurality of feature parameters with respect to at least one vocal feature, and determining a modified adaptive font for the one or more subunits of speech based on a quantified deviation between the second respective plurality of feature parameters and the first plurality of feature parameters, wherein formatting the at least one part of the textual information based on the adaptive font for display to the user comprises formatting one or more parts of the textual information corresponding to the one or more subunits of speech using the modified adaptive font. This particular embodiment may enable a particular granular adaptation of the adaptive font to reflect some particular local changes in the unit of speech (e.g. emphasis on some words).

According to any of the above embodiments, the method may be adapted to convey oral characteristics of utterances of the audio data to deaf or hard-of-hearing persons, such as prosodic, linguistic and/or paralinguistic aspects.

In a second aspect of the disclosure, there is provided one or more computing devices, comprising one or more processors configured to perform the method according to any embodiment of the first aspect of the disclosure.

In a third aspect of the disclosure, there is provided one or more computer-readable storage media storing instructions thereon which, when executed by one or more processors, cause the one or more processors to carry out the method according to any to any embodiment of the first aspect of the disclosure.

Many of the attendant features will be more readily appreciated as they become better understood by reference to the following detailed description considered in connection with the accompanying drawings.

### BRIEF DESCRIPTION OF THE DRAWINGS

Specific features, aspects, and advantages of the disclosure will be better understood with regard to the following description and accompanying drawings, wherein:
- Fig. 1: illustrates an exemplary computing system according to embodiments of the disclosure;
- Fig. 2: illustrates a font processing system according to embodiments of the disclosure;
- Fig. 3: illustrates an example of plurality of feature parameters according to embodiments of the disclosure;
- Fig. 4: illustrates examples of visual adaptations applicable to generate the adaptive font according to embodiments of the disclosure;
- Fig. 5: illustrates an example of encoding of an adaptive font determined for an utterance according to embodiments of the disclosure;
- Fig. 6: illustrates an example of generation of the adaptive font using a variable font generation technique according to embodiments of the disclosure;
- Fig. 7: illustrates an example of generation of the adaptive font using a discrete value generation technique according to embodiments of the disclosure;
- Fig. 8: illustrates an example of generation of the adaptive font using a custom font modifying technique according to embodiments of the disclosure;
- Fig. 9: illustrates an example of generation of the adaptive font using an AI-based generation technique according to embodiments of the disclosure; and
- Fig. 10: shows a flow diagram of a method according to a preferred embodiment of the disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter. It is not intended to represent the only forms in which the present example may be constructed or utilized. However, the same or equivalent functions and sequences may be accomplished by different examples. Furthermore, as used in this application and in the claims, the singular forms "a," "an," and "the" include the plural forms unless the context clearly dictates otherwise. Additionally, the term "includes" means "comprises." Further, the term "coupled" encompasses mechanical, electrical, magnetic, optical, as well as other practical ways of coupling or linking items together, and does not exclude the presence of intermediate elements between the coupled items.

The techniques described herein may be implemented in various computing environments, examples of which are described in greater detail below. Such environments generally involve the use of suitably-configured computing devices implementing a number of modules or units, each providing one or more operations needed to complete execution of such techniques. Each module or unit may be implemented in its own way; all need not be implemented the same way. As used herein, a module or unit may be a structural component of a system which performs an operational role, which may be a portion of or an entire software element (e.g., a function of a process, a discrete process, or any other suitable embodiment). A module or unit may comprise computer-executable instructions and may be encoded on a computer storage medium. Modules or units may be executed in parallel or serially, as appropriate, and may pass information between one another using a shared memory on the computer on which they are executing, using a message passing protocol or in any other suitable way.

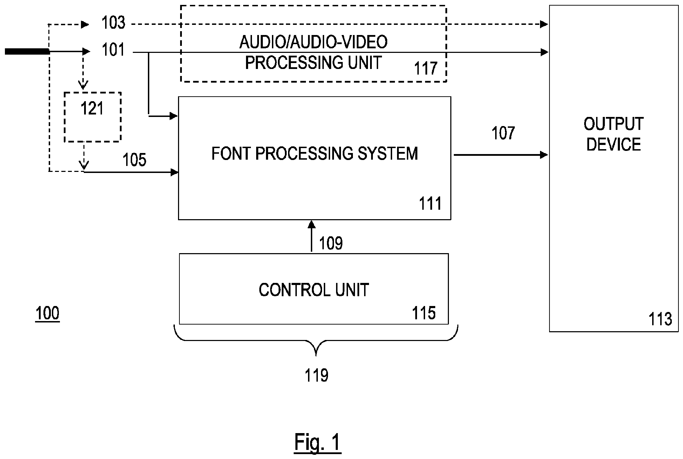

Fig. 1 illustrates a computing system 100 of interest according to some embodiments of the disclosure and configured to process at least audio data 101, textual information 105 transcribing an utterance comprised in the audio data 101 to provide formatted textual information 107 formatted at least in part using an adaptive font determined based on oral characteristics associated with the utterance. Moreover, in some embodiments, the computing system further comprises an output device 113 to display the formatted textual information 107 to a user, and also e.g. the audio data 101.

For instance, the computing system 100 may comprise a font processing system 111, an output device 113, a control unit 115, and optionally a transcribing unit 121 and an Audio/Audio-Video processing unit 117. For instance, the computing system 100 may be part of a system for providing audio-video content to a user for consumption. In an example, audio-video data are received (e.g., as a stream). The audio-video data may be any kind of audio-video content such as any kind of video (e.g., a movie), an online stream, a videoconference, an audio-vide-ochat, a video game and the like. For instance, the audio-video data may be received as one or more input signals comprising a signal carrying video data 103 (e.g., a video data stream) and a corresponding signal carrying audio data 101 (e.g. an audio data stream). In some embodiments, the audio-video data may further include textual information 105 transcribing the informational content of the audio data 101 in writing, such as subtitles or closed captions. In another embodiment, an optional transcribing unit 121 may be provided to generate said textual information 105 from the audio data 101. In one embodiment, the textual information 105 may be received and/or generated synchronously, or nearly synchronously, with at least the audio data 101. It may correspond for instance to a separate stream associated with the audio-video data.

In an embodiment, the computing system 100 is configured to identify and obtain the textual information 105 transcribing an utterance comprised/encoded in the audio data 101 and to provide the audio data 101 comprising the utterance and the textual information 105 in a nearly synchronized manner to the font processing system 111. In turn, the font processing system 111 may be configured to process them to output formatted textual information 107 corresponding to the utterance. In an example, the formatted textual information 107 may correspond to an output stream provided at least in association with the audio data 101 and video 103 to the output device 113 for output to a user. In an example, this output stream may be timely associated with the audio data 101 and video data 103.

The output device 113 may be any kind of output device capable of rendering the audio-video data (comprising audio data 101 and video data 103) and the associated formatted textual information 107 (e.g., as subtitles). In an example, at least the video data 103 and the formatted textual information 107 may be rendered by the output device 113 to a user. In another example, the full audio-video content of the audio-video data including audio data 101 and video data 103 may be rendered with the formatted textual information 107 by the output device 113. For instance, the output device 113 may comprise a display device, a mobile device, a tablet device, a laptop, a projection device (such as a beamer), including, optionally, any associated audio output device for the audio data 101.

In some embodiments, the computing system 100 comprises a control unit 115 configured to control at least the font processing system 111. For instance, the control unit 115 may be configured to receive any configuration input and/or calibration input (not shown) for configuring and/or calibrating the font processing system 111. In an embodiment, the control unit 115 may receive a configuration input from a user via, e.g., a configuration menu displayed to the user using the output device 113. The configuration input may provide user preferences configuring the augmentation provided by the adaptive font of the formatted textual information 107. For instance, the configuration input may comprise settings indicating whether the user wants an augmentation associated with voice characteristics, linguistic characteristics and/or paralinguistic aspects detected in the audio data. The font processing system 111 is configured to adapt the delivered formatted textual information 107 accordingly.

In some embodiments, the font processing system 111 and the control unit 115 belong to a processing system 119. In some examples, the processing system 119 and the output device 113 may belong to a same computing device, e.g., a user computing device (e.g., a tablet, a personal computer, a laptop, or a mobile device). In other examples, the processing system 119 and the output device 113 may belong to separate computing devices in communication one with another. For instance, the processing system 119 may be part of a remote computing device (e.g., a cloud computing system) and may be in communication with a local/user computing device comprising the output device 113 via a network.

Additionally, the processing system 119 may also optionally comprise an Audio/Audio-Video processing unit 117 for transforming the audio data 101 and/or the video data 103 in an input format supported by the output device 113. Alternatively, the audio/video data may be already provided in a format suitable for the output device 113. For instance, the output device 113 may comprise respective processing means to process the audio data 101 and/or the video data 103 for rendering to a user.

In an alternative embodiment, the computing system 100 may be provided with no video data and no video processing means. For instance, such computing system may be particularly suitable to process an audio stream (e.g., a podcast), audio broadcast data, audio data of a call (e.g., a phone call), audio data of an event that the user is currently experiencing, such as a live event (e.g., a conference that the user is receiving using an audio processing / recording device) or a virtual event. In such cases, the computing system 100 may simply receive audio data 101 and optionally textual information 105 as input and may globally remain the same as the one described above as it uses no video signal. Such an alternative computing system 100 may for instance correspond to the computing system 100 of Fig. 1 without the traced video data 103. In such cases, the output device 113 may also be any output device comprising a display so as to display the formatted textual information 107 to the user. For instance, it may be comprised in a user computing device (e.g., a mobile device).

In any embodiment of the computing system 100, the audio data 101 may be received, e.g., in WAV format or the like.

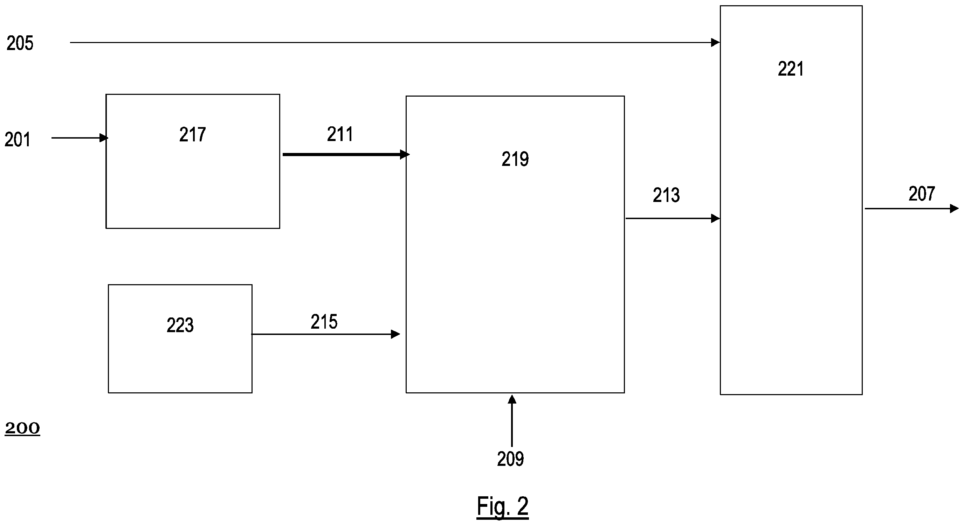

Fig. 2 illustrates font processing system 200, which may correspond to the font processing system 111 of the computing system 100 of Fig. 1. In an embodiment, it comprises a speech analysis unit 217, an adaptive font generation unit 219, a font source 223 and a font application unit 221. In an embodiment, the speech analysis unit 217 is configured to obtain audio data 201 (e.g., audio data 101 of Fig. 1) comprising an utterance and textual information 205 (e.g., textual information 105 of Fig. 1) transcribing the utterance as input and determine, for the utterance and using a trained model, a plurality of feature parameters 211 associated with a plurality of vocal features. Based on the obtained plurality of feature parameters 211, the adaptive font generation unit 219 is configured to determine an adaptive font 213, wherein at least one aspect of the adaptive font is adapted based on at least one of the plurality of feature parameters. In some embodiment, this may further be based on one or more fonts 215 provided by the font source 223, as explained below. Then, the font application unit 221 is configured to format at least one part of the textual information 205 using the adaptive font 213 for display to a user. In some examples, the output of the font application unit 221 may be a formatted textual information 107 associated with the utterance, that is subsequently provided to the output device 113 for display to the user.

In some preferred embodiments, the speech analysis unit 217 is responsible for determining the plurality of feature parameters 211 associated with a plurality of vocal features for the utterance based on the audio data 201 comprising the utterance. In an embodiment, an utterance may correspond to a vocal statement or expression comprised in the audio data 201. It may be particularly associated with one person (e.g., speaker, singer, speaking character etc. in the audio data). For instance, it may correspond to a sentence. In specific cases, it may correspond to a single spoken word (e.g., an interjection). Additionally, a certain time window of the audio data 201 may be associated with the utterance. The same time window may be also associated with the determined plurality of feature parameters for the utterance. In some embodiments, an intermediate processing unit (not shown) may be provided in font processing system 200 (e.g., in speech analysis unit 217) to associate one or more utterances identified in the audio data 201 with one or more respective textual information 205 transcribing the one or more utterances.

According to some preferred embodiments, the speech analysis unit 217 is configured to assess, for each vocal feature of a plurality of vocal features, whether the utterance exhibits the vocal feature and/or a quantification result/confidence level in the assessment. Accordingly, the plurality of vocal features may correspond to a plurality (e.g., a list or catalogue) of vocal features that the utterance potentially exhibits. In some embodiments, the result of the assessment is provided as a plurality of feature parameters associated with the plurality of vocal features. These plurality of features parameters may particularly characterize the utterance, e.g., in terms of values, cues, estimations and the like.

For instance, the speech analysis unit 217 may provide a corresponding quantification result representing an assessment result for each given vocal feature of the plurality of vocal features. For certain types of vocal features, the quantification result may be a probability, a confidence level, a percentage value or the like. The quantification result may be then stored as a feature parameter associated with the given vocal feature. Accordingly, the speech analysis unit 217 is configured to repeat such an assessment for each of the plurality of vocal features to determine the plurality of feature parameters 211 associated with the plurality of vocal features for the utterance.

In some embodiment, the trained model of the speech analysis unit 217 may comprise or correspond to a speech emotion recognition model. For instance, it comprises a machine learning model, a deep learning model, a large language model and/or a natural language processing model.

In an embodiment, the speech emotion recognition model may be provided or generated as follows. First, a model type is chosen, or a combination of models (see above exemplary list). Second, the chosen model is trained using, e.g., a supervised learning process and with labelled training data. Third, the model may be fine-tuned (e.g., using hyperparameter tuning). Fourth, a cross-validation process using samples from different fields and/or contexts is performed. Fifth, the resulting trained model may be packaged, e.g., as an Application Program Interface, API for usage. In some examples, Domain Knowledge may be used to define specific associations.

In an embodiment, the speech analysis unit 217 is configured to determine, for the utterance and using the trained model (e.g., the speech emotion recognition model, provided e.g. as an API), the plurality of feature parameters 211 as follows.

First, a portion of the audio data 201 associated with the utterance may be identified and processed. In some examples, one or more intermediate data conversions may be required.

Then, one or more audio features from the portion of the audio data may be extracted, such as Mel-frequency cepstral coefficients (MFCC), Zero-crossing rate (ZCR), Chromagram Short-Time Fourier Transformation values (Chroma-STFT), Root Mean Square values (RMS), and/or a Mel-scaled Spectrogram (MSS)).

Then, the portion of the audio data and the one or more audio features are input into the trained model.

Further, based on the portion of the audio data and the one or more audio features, the trained model determines the plurality of feature parameters 211 associated with the plurality of vocal features.

In a preferred embodiment of the disclosure, the plurality of vocal features considered by the trained model may belong to one or more vocal feature categories. For instance, they may be from a plurality of vocal feature categories such as a paralinguistic features category, a phonetical features category and/or a voice characteristics category. Accordingly, the resulting plurality of feature parameters 211 obtained for a given utterance may comprise:
one or more paralinguistic parameters associated with one or more paralinguistic features, e.g. in the paralinguistic features category,
one or more phonetical parameters associated with one or more phonetical features e.g. in the phonetical features category and/or
one or more voice parameters associated with one or more voice characteristics e.g. in the voice characteristics category.

In some preferred embodiments, the one or more paralinguistic parameters may comprise one or more parameters associated with one or more candidate emotions, each representing an estimation indicating whether the utterance exhibits a respective candidate emotion. The one or more candidate emotions may comprise one or more of anger, j oy, fear, grief, activeness, harmony and the like.

In some preferred embodiments, the one or more phonetical parameters may particularly relate to linguistic characteristics comprising one or more of: a parameter indicating a detected language of the utterance, a parameter indicating a detected accent of the utterance (e.g. also including sociolects, dialects), one or more confidence levels for one or more candidate languages, each indicating a confidence level that the utterance is in a respective candidate language, and/or one or more confidence levels associated with one or more candidate accents, each indicating a confidence level that the utterance exhibits a respective candidate accent.

In some preferred embodiments, the one or more voice parameters associated with the one or more voice characteristics may comprise one or more of: a parameter indicating a loudness level of the utterance, a parameter indicating a speech rate of the utterance, and/or a parameter indicating a pitch of the utterance. It may also include one or more parameters representing a rhythm, a quality, an proportion of breaks in the utterance and the like.

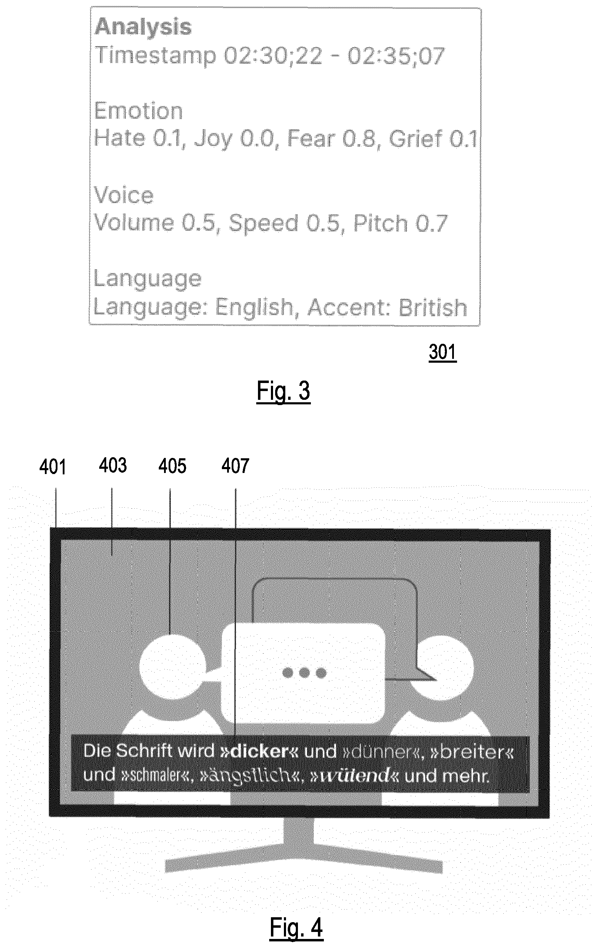

Fig. 3 provides an example of plurality of feature parameters 301 (e.g. 211) provided for a given utterance. In an example, the plurality of feature parameters 301 may be associated with a particular time window or sequence of the audio data 201 for clear association with the analyzed portion of the audio data 201 comprising the utterance. In this example, the plurality of feature parameters 301 comprises the paralinguistic features category of "emotion" and comprises four candidate emotions "hate", "Joy", "Fear" and "Grief' each associated with a respective paralinguistic parameter ("0.1", "0.0", "0.8" and "0.1"). The plurality of feature parameters 301 may further comprise the voice characteristics category of "Voice" comprising a "volume" parameter indicating a loudness level of the utterance ("0.5"), a "Speed" parameter indicating a speech rate of the utterance ("0.5") and a "Pitch" parameter indicating a pitch of the utterance ("0.7"). The pitch parameter may be particularly relevant to distinguish the gender and/or the type of speaker or singer (e.g. adult, child etc.) and/or to identify particular changes in intonations or stresses in the audio data 201. The plurality of feature parameters 301 may also comprise the phonetical features category of "Language" comprising a parameter indicating a detected language of the utterance ("English") and a parameter indicating a detected accent of the utterance ("British").

In a preferred embodiment, the plurality of feature parameters 301, such as the one illustrated in Fig. 3, may be at least in part normalized and may be stored in a plurality of values (e.g. coordinates) of a vector. It may be stored in an array or a matrix.

Returning to Fig. 2, the adaptive font generation unit 219 is configured for determining an adaptive font 213 best representing the utterance based on the plurality of feature parameters 301. Once applied to the textual information 205 associated with the utterance by the font application unit 221, the resulting formatted textual information 107 conveys not only the plaintext of the textual information 205 but also at least some of the most significant oral characteristics of the utterance using amended visual aspects or features of the adaptive font 213. By using the adaptive font 213, there is no need to display additional visual effects to visually represent or convey these characteristics. The user simply needs to read the text to obtain at once a literal content augmented with corresponding font adaptations.

Fig. 4 illustrates an example of such an augmentation and shows a picture of a displayed video 403 on a display device 401, wherein a character 405 is speaking and issues an utterance. Element 407 shows an example of formatted textual information typically associated with an utterance (e.g. a subtitle). In the present example, element 407 simply illustrates different ways for augmenting textual information for conveying paralinguistic or prosodic features using adaptive font.

Specifically, the plaintext content of the textual information (in German) reads:
"Die Schrift wird "dicker" und "dunner", "breiter" und "schmaler", "angstlich", "wütend" und mehr".

It means in English:
"The font becomes "thicker" and "thinner", "wider" and "narrower", "fearful", "angry" and more".

However, in this example, the font becomes:
- thicker (in German: "dicker") to indicate a high loudness level of the utterance,
- thinner (in German: "dunner") to indicate a low loudness level of the utterance,
- wider (in German: "breiter") to indicate a low speech rate of the utterance,
- narrower (in German: "schmaler") to indicate a high speech rate of the utterance,
- tilted to the left (see the word "angstlich" i.e. fearful) to represent an emotion of fear or globally a passive emotion detected in the utterance, or
- tilted to the right (see the word "wütend" i.e. angry) to represent an emotion of anger or globally an active emotion detected in the utterance.

These simply correspond to some illustrative examples. The contemplated adaptations of the font are not limited to these examples and may also comprise combinations of adaptations based on one or more predefined fonts and/or amending one or more of:
- microtypographical aspects or microtypographical elements (e.g. a serif, a stroke width, a font width, an ascender, a descender, a type posture and an vertical orientation of one or more characters of a predefined font),
- one or more macrotypographical aspects or macrotypographical elements (e.g. a font size, a character spacing, a line spacing, a word rotation, a word transparency, and a word stress of a predefined font),
- one or more display characteristics or display elements (such as one or more of a font color, a highlight color, or a shadowing effect of a predefined font), and/or
- one or more dynamic characteristics (such as providing an additional shaking effect or a particular animation to the adaptive font).

A non-exhaustive list of exemplary augmentations is provided in the following. For instance, determining the adaptive font 213 based on the plurality of feature parameters 211 may comprise one or more of the following:
- adapting the typeface of a predefined font to be bold when one or more feature parameters from the plurality of feature parameters indicate that a loudness level of the utterance is high, and/or adapting the typeface of a predefined font to be thin when one or more feature parameters from the plurality of feature parameters indicate that a loudness level of the utterance is low,
- decreasing a character spacing and/or a character width of a predefined font when one or more feature parameters from the plurality of feature parameters indicate that a speech rate of the utterance is high, and/or increasing a character spacing and/or a character width of a predefined font when one or more feature parameters from the plurality of feature parameters indicate that a speech rate of the utterance is low,
- tilting a posture of a predefined font in a direction corresponding to the reading direction when one or more feature parameters from the plurality of feature parameters are representative of a significant presence of activeness in the utterance, and/or tilting a posture of a predefined font in a direction opposite to the reading direction when one or more feature parameters from the plurality of feature parameters are representative of a significant presence of passiveness in the utterance,
- adapting a vertical orientation of one or more characters of a predefined font by orienting the end of the one or more characters to the top when one or more feature parameters from the plurality of feature parameters are representative of a significant presence of joy or a positive emotion in the utterance, and/or adapting a vertical orientation of one or more characters of a predefined font by orienting the end of the one or more characters to the bottom when one or more feature parameters from the plurality of feature parameters are representative of a significant presence of grief or a negative emotion in the utterance,
- orientating a shadow axis to e.g. 45 degrees to express harmony, or using an unusual alignment of the shadow axis of more than 90 degrees to express disharmony,
- using pointed, angular shapes and curves to express hard, consonant and plosive speech or negative emotion,
- using round shapes and curves to express soft, vowel-rich speech or positive emotion,
- using an even stroke width contrast represents balance or a high stroke width contrast to express imbalance,
- using a static optic of the letters / characters to reflect the emotional stability of a speaker,
- expressing deviations of sounds from the norm by an end of a glyph pointing in a corresponding direction, and
- mapping a spacing of characters to a measure of density of the sounds.

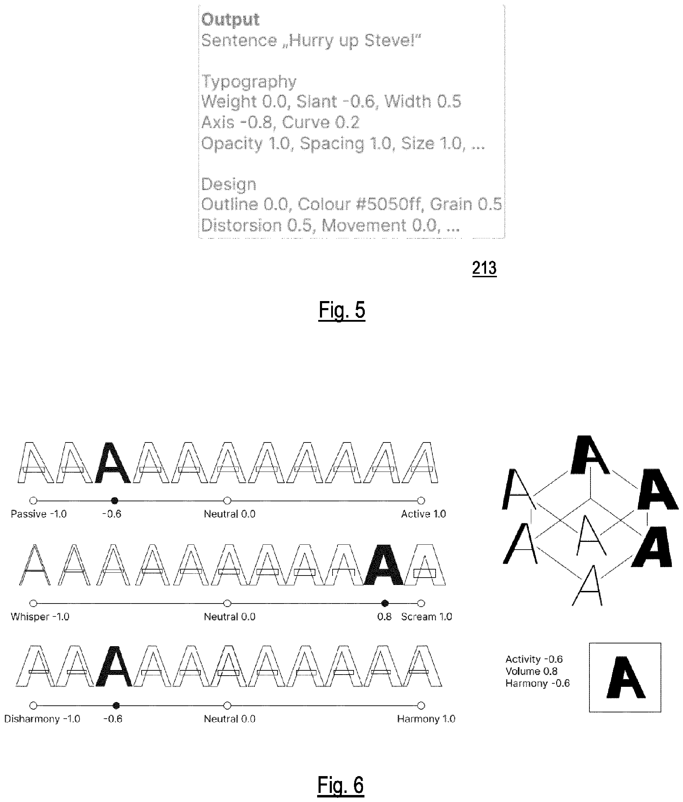

Fig. 5 illustrates a particular representation of the adaptive font 213 determined for a particular utterance (e.g. the sentence "Hurry up Steve!"). For instance, based on the plurality of feature parameters 301 illustrated in Fig. 3, the adaptive font generating unit 219 may be configured to determine the adaptive font 213 as shown in Fig. 5, comprising values or parameters representing microtypographical aspects, macrotypographical aspects, display characteristics, dynamic characteristics and the like.

In a preferred embodiment, the font processing system 200 and particularly its adaptive font generation unit 219 may be first configured to identify one or more significant vocal features for the utterance based on the plurality of feature parameters 211, wherein the one or more significant vocal features and their one or more respective determined feature parameters in the plurality of feature parameters 211 are representative of the utterance. In this case, determining the adaptive font based on the plurality of feature parameters 211 may comprise determining the adaptive font based on the one or more determined feature parameters of the one or more significant vocal features. In other words, focus is particularly made on the most salient vocal features detected for the utterance among the plurality of vocal features, in some embodiments.

In an embodiment, the plurality of vocal features are categorized according to a plurality of vocal feature categories, and identifying the one or more significant vocal features for the utterance based on the plurality of feature parameters 211 may comprise determining, in each category of the plurality of vocal feature categories, a dominant vocal feature, and selecting the one or more significant vocal features among the determined dominant vocal features for the plurality of vocal feature categories. For instance a dominant vocal feature may be identified in the paralinguistic feature category (e.g. anger) and another one in the phonetical features category (e.g. a French accent).

In some embodiments, the one or more significant vocal features may be associated with one or more respective predetermined types of adaptations and determining the adaptive font based on the one or more determined feature parameters of the one or more significant vocal features may comprise applying the one or more predetermined types of adaptations based on the one or more determined feature parameters of the one or more significant vocal features. For instance, each of the one or more significant vocal features may be associated with a particular type of font adaptations, such as the ones listed above (see non-exhaustive list).

According to a particularly preferred embodiment, the adaptive font generation unit 219 may comprise, or be embodied as, a variable font generation unit 219a (see Fig. 2) configured to determine the adaptive font 213 based on the plurality of feature parameters 211 using a variable font generation technique. For instance, it may comprise determining, for each significant vocal feature of the one or more significant vocal features, an application factor of the predetermined type of adaptation for the significant vocal feature based on the determined feature parameter associated with the significant vocal feature. In this case, applying the one or more predetermined types of adaptations based on the one or more determined feature parameters of the one or more significant vocal features may comprise applying the one or more predetermined types of adaptations to a predefined font in proportions correlated with the application factors of the one or more predetermined types of adaptations to generate the adaptive font. This may provide a progressive effect, application of respective types of adaptations to said predefined font. The predefined font may correspond to a font provided by the font source 223. It may correspond for instance to a basic font that is particularly easy to read.

In some cases, the proportions of correlation may be according to a positive correlation, negative correlation, linear correlation (proportional), a logarithmic correlation or the like.

In particular cases, for each significant vocal feature of the one or more significant vocal features, the application factor of the respective predetermined type of adaptation may be likewise correlated with the determined feature parameter of the significant vocal feature. This may be a linear correlation, or according to any specific formula. This correlation may be also implemented as a mapping.

In these cases, for each significant vocal feature of the one or more significant vocal features, the application factor of the respective predetermined type of adaptation may particularly be on a scale (e.g. an axis) having a minimum value and a maximum value, the minimum value indicating a first degree of application of the predetermined type of adaptation and the maximum value a second degree of application of the predetermined type of adaptation. The first degree of application of the predetermined type of adaptation may be a minimum degree of application of the predetermined type of adaptation and the second degree of application of the predetermined type of adaptation may be a maximum degree of application of the predetermined type of adaptation, or vice-versa. In a particular case, the first degree of application of the predetermined type of adaptation is a maximum negative degree of application of the predetermined type of adaptation (e.g. a maximum negative tilt) and the second degree of application of the predetermined type of adaptation is a maximum positive degree of application of the predetermined type of adaptation (e.g. a maximum positive tilt). In some preferred embodiment, the scale is a normalized scale (e.g. between 0 and 1, or between -1 to +1). Additionally, or in an alternative, a median value of the scale may correspond to a value of non-application of the predetermined type of adaptation. For instance, if the scale extends between -1 and +1, a value of 0 may correspond to a neutral position, i.e. a non-application of the predetermined type of adaptation to the predefined font.

According to this variable font generation technique, the predefined font may be a variable font having on or more aspects progressively adaptable or parameterized. In an embodiment, the one or more application factors for the one or more predetermined types of adaptations are one or more weights impacting the application of the one or more predetermined types of adaptations.

For example, as illustrated in Fig. 4, consider the case where a significant vocal feature of the utterance is to be particularly loud. It may mean that the plurality of feature parameters comprises a parameter associated with a loudness voice characteristic in the plurality of feature parameters 211 which indicates a high loudness level (e.g. being above a predetermined threshold). A particular type of adaptation of the predefined font may be associated with the loudness voice characteristic and may be to adapt a typeface of the predefined font to become bold or thicker when the parameter associated with a loudness voice characteristic indicates a high loudness level.

Additionally or as an alternative, the same utterance may have a significant vocal feature of the utterance of having the mood of anger. It may mean that the plurality of feature parameters 211 comprises a parameter associated with the candidate emotion of anger which is high (e.g. being above another predetermined threshold). A particular type of adaptation of the predefined font may be likewise associated with the candidate emotion of anger and be e.g. to tilt a posture of the predefined font in a direction corresponding to the reading direction.

According to this example, the variable font generation unit 219a may be configured to adapt the typeface of the predefined font to become bold and/or to tilt the posture of the predefined font in a direction corresponding to the reading direction. Additionally, respective application factors may be respectively determined for the loudness voice characteristic and the candidate emotion of anger based on their determined feature parameters in the plurality of feature parameters 211. These application factors may correspond to values on respective scales (e.g. coordinates) and the respective types of adaptations may be applied in proportions correlated with these application factors (e.g. proportionally). Accordingly, the thickening effect applied to the predefined font may be progressive or variable to progressively represent the value of the parameter associated with a loudness voice characteristic. Similarly, the tilt of the posture of the predefined font in the reading direction may be correlated to the value of the parameter associated with the candidate emotion of anger. For instance, if this determined feature for the candidate emotion of anger indicates a confidence level of 80% that the utterance exhibits anger, the applied tilt of the posture of the predefined font in a direction corresponding to the reading direction may correspond to 80% of a maximum tilt.

Fig. 6 particularly illustrates the variable font generation technique described above. For instance, imagine that a plurality of significant vocal features is identified, being activeness, loudness level and harmony. In an embodiment, their respective determined feature parameters in the plurality of feature parameters 211 may be -0.6, 0.8 and -0.6, respectively. Additionally, a first type of adaptation for activeness may be a tilt of the posture of the predefined font, a second type of adaptation for the loudness a thickness of the character stroke and a third type of adaptation for harmony a left/right balance of the stroke thickness. Accordingly, considering a linear correlation between these determined feature parameters and respective applications factors for these types of adaptations, the applications factors may equally correspond to -0.6 for the first type of adaptation, 0.8 for the second type of adaptation and -0.6 for the third type of adaptation. All these types of adaptations may be applied collectively to the predefined font to lead to the adaptive font shown at the right-hand corner at the bottom of the figure.

According to another embodiment, the adaptive font generation unit 219 may comprise, or be embodied as, a discrete value font generation unit 219b (see Fig. 2) configured to determine the adaptive font 213 based on the plurality of feature parameters 211 using a discrete value generation technique. This may involve selecting a proxy font from a plurality of proxy fonts as the adaptive font 213 based on the plurality of feature parameters 211. For instance, the font source 223 may configured to provide some prepared fonts each representative of some types of vocal features or combination of types of vocal features.

For instance, particular fonts may be predetermined in advance for certain combinations of vocal features (e.g. paralinguistic vocal features) so as to form a plurality of proxy fonts. The fonts of the plurality of proxy fonts may be each associated with a respective set of predetermined values for the feature parameters for the plurality of vocal features. Accordingly, in this embodiment, the discrete value font generation unit 219b may be configured to select the proxy font from the plurality of proxy fonts, the set of predetermined values of which is the closest to the plurality of feature parameters 211. This selection may be performed by determining e.g. a distance (e.g. Euclidian distance) between a first vector comprising plurality of feature parameters 211 associated with the utterance and each of a plurality of predetermined vectors associated with the plurality of proxy fonts. Other determination techniques are also contemplated.

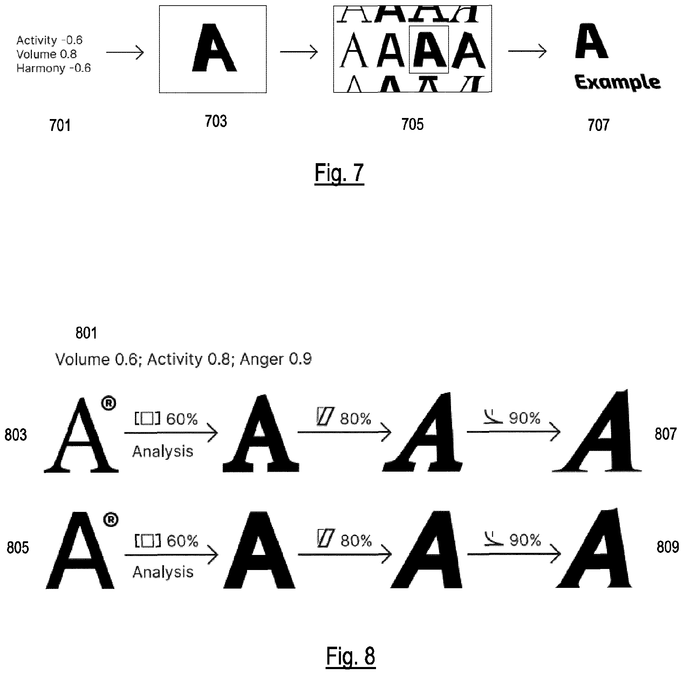

Alternatively, the plurality of proxy fonts may correspond to a plurality of predetermined fonts generated at least for a range of discrete values for each of the one or more feature parameters of the one or more significant vocal features, wherein each proxy font is associated with a particular combination of discrete values forming a respective set of proxy coordinates. For instance, looking at Fig. 7, element 705 may correspond to such a plurality of proxy fonts. It may comprise different proxy fonts for at least various discrete values of feature parameters for vocal features of activeness, loudness level and harmony. Each proxy font may correspond to corresponding proportions of corresponding types of adaptations applied to a particular predefined font, e.g. using the variable font generation technique described above, or to a particular font specifically developed for a combination of discrete values (as illustrated in element 705). For instance, the plurality of proxy font may comprise proxy fonts for discrete values of the feature parameters for activeness, loudness level and harmony ranging from (-1, 0, -1) to (+1, 1, +1), and e.g. with discrete steps of 0.25. According to this example, the step of selecting the proxy font from the plurality of proxy fonts as the adaptive font based on the plurality of feature parameters 211 may comprise selecting a particular proxy font from the plurality of proxy fonts, the set of proxy coordinates of which is the closest to the one or more determined feature parameters of the one or more significant vocal features. For instance, for determined feature parameters of the one or more significant vocal features having the values (-0,6, 0.8, -0.6) for activeness, loudness level and harmony (see element 701), the discrete value font generation unit 219b may select the proxy font having the proxy coordinates of (-0.5, 0.75, -0.5) in 705 and uses it as the adaptive font (see 707).

One advantage of the discrete value font generation technique is to need less computational resources since it simply needs a mapping process instead of a parameterization process of a variable font. It may potentially accelerate the adaptive font generation.

According to yet another embodiment, the adaptive font generation unit 219 may comprise, or be embodied as, a customized font modifying unit 219c (see Fig. 2) configured to determine the adaptive font 213 based on the plurality of feature parameters 211 using a custom font modifying technique. It may include applying one or more custom types of adaptations to a custom font based on the one or more determined feature parameters of the one or more significant vocal features. For instance, the one or more custom types of adaptations may be defined according to one or more custom rules for the custom font.

For instance, the custom font may correspond to a font that has been customized to have a predefined look. It may be representative or notoriously associated with of e.g. a group of persons, an organization, a company or a brand. Its usage may be restricted. In this embodiment, the one or more custom rules may be implemented in form of a modifying algorithm or may correspond to predefined custom adaptations developed in advance. In some embodiments, it may comprise applying some types of adaptations similar to the ones discussed above with the variable font generation technique, e.g. using progressive adaptations correlated with the feature parameters of some significant vocal features identified in the utterance. Fig. 8 illustrate such custom adaptations predetermined for different custom fonts 803, 805. For same feature parameters 801 of the significant vocal features of loudness level, activeness, and anger, but starting from different custom fonts, different adaptive fonts 807, 809 are obtained.

In an embodiment, the one or more custom rules may be configured to limit the application of the one or more custom types of adaptations to maintain an overall look of the custom font, i.e. to maintain the association of the adapted custom font with e.g. its associated organization or company.

According to a further embodiment, the adaptive font generation unit 219 may comprise, or be embodied as, an Artificial Intelligence, AI, based font generation unit 219d (see Fig. 2) and configured to determine the adaptive font 213 based on the plurality of feature parameters using an AI-based generation technique. This may include generating the adaptive font 213 using a further trained model and based on the plurality of feature parameters 211.

For instance, the further trained model may be a model trained on a set of labelled fonts, each representative of some particular vocal features. The further trained model may be trained to learn some reference associations between a set of combinations of values for the plurality of feature parameters 211 and respective sets of derived reference fonts. Once trained, the generation of the adaptive font using the further trained model may be based on the plurality of feature parameters 211 and these reference associations.

Moreover, generating the adaptive font based on the plurality of feature parameters 211 and the reference associations may particularly comprise applying, to one or more fonts from the set of derived reference fonts: one or more adaptations of one or more microtypographical aspects or one or more microtypographical elements, one or more adaptations of one or more macrotypographical aspects or one or more macrotypographical elements, one or more adaptations of one or more display characteristics or one or more display elements and/or one or more adaptations of one or more dynamic characteristics (see also non-exhaustive list above). The AI-based generation technique is particularly suitable to integrate or develop various types of adaptation representative of particular vocal features or particular combinations of vocal features recognized in an utterance.

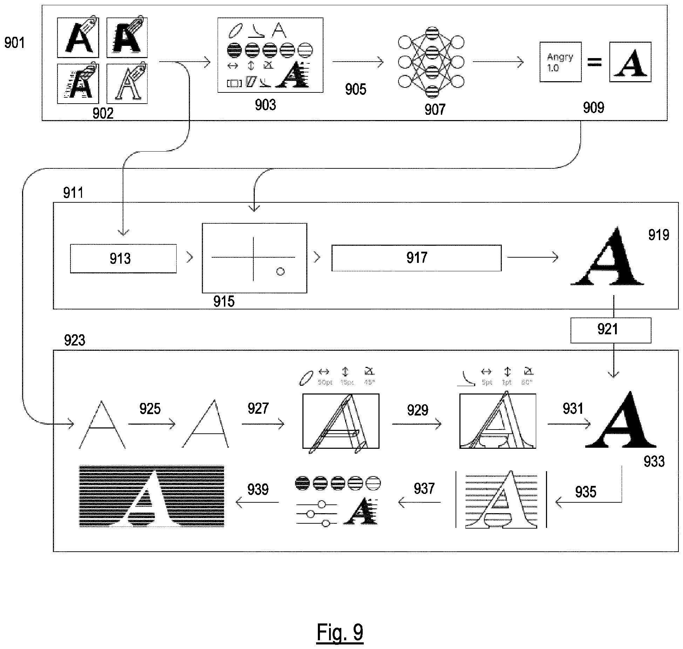

Additionally, the step of generating the adaptive font based on the plurality of feature parameters 211 and the reference associations may further involve either a stable diffusion process or a character skeleton mapping process. Further details are provided with Fig. 9 below.

For instance, first, a preliminary design analysis process 901 may performed as part of the training of the further trained model. A plurality of labelled fonts 902 is provided (e.g. from the font source 223). Some of them may be associated with some representative combinations of feature parameters of the plurality of vocal features. Some of them may alternatively or additionally be simply particularly representative of some vocal features (e.g. some particular emotions). A feature extraction 903 may be performed on the plurality of labelled fonts 902 using deep learning or machine learning 905, and a classification process 907 may be further performed to learn some reference associations 909 between sets of combinations of values for the plurality of feature parameters of feature parameters and respective sets of derived reference fonts. For instance, this may correspond to language - design link assignments 909, where diverse types of language are associated with respective designs, derived reference fonts and/or respective combinations of types of adaptations (e.g. combinations of microtypographical adaptations).

According to a first implementation, the further trained model may be configured to determine the adaptive font 933 (e.g. 213) using a stable diffusion process 711. For instance, a preliminary diffusion process 913 may be made on the plurality of labelled fonts 902. Further, based on the plurality of feature parameters 211 determined for the utterance, a semantic mapping 915 may be made. Subsequently, a pretrained design generation using a reverse diffusion process 917 may be then performed to obtain an intermediate generated font 919, which is typically pixelized. A vectorization process 921 on the obtained intermediate generated font 919 enables to obtain the adaptive font 933, e.g. 213 in Fig. 2 or 5.

According to a second implementation of the example, a skeleton mapping 923 may be performed using the further trained model and the reference associations 909. It may involve a skeleton adjustment step 925, a stroke application step 927, a style adjustment step 929. The result may be font 933, e.g. the adaptive font 213.

Additionally, in any of both implementations, a metrics determination and a kerning process 935 as well as some design adjustments 937 may follow to obtain a final textual output 939 (e.g. subtitle output). These steps may be particularly performed by font application unit 221 of Fig. 2.

Returning to Fig. 2, the font application unit 221 is configured to format at least a part of the textual information 205 transcribing the utterance using the adaptive font 213 determined by the adaptive font generation unit 219 for display to a user. For instance, a part of the textual information 205 transcribing the utterance, or the entire textual information 205, may be formatted by uniformly applying the adaptive font 213. It may comprise additional steps of metrics determination, kerning and/or design adjustments. The output of the font application unit 221 may be the formatted textual information 207 (also referred to 107 in Fig. 1).

In yet another embodiment, the utterance that is analyzed by the font processing system 200 may correspond to a unit of speech, which may typically correspond to a sentence or a vocal statement. However, in some embodiments, the adaptive font 213 determined for the utterance may not be applied uniformly to the textual information 205 transcribing the utterance.

For instance, the plurality of feature parameters 211 associated with the plurality of vocal features determined for the utterance may correspond to a first plurality of feature parameters. The front processing system 200 (e.g. the speech analysis unit 217) may be further configured to determine one or more subunits of speech in the unit of speech having a second respective plurality of feature parameters substantially deviating from the first plurality of feature parameters with respect to at least one vocal feature. The front processing system 200 (e.g. the adaptive font generation unit 219) may further determine a modified adaptive font for the one or more subunits of speech based on a quantified deviation between the second respective plurality of feature parameters and the first plurality of feature parameters. Finally, the front processing system 200 (e.g. the font application unit 221) may be configured to format one or more parts of the textual information 205 corresponding to the one or more subunits of speech using the modified adaptive font and e.g. keep the rest of the textual information 205 formatted using the adaptive font 213. In this way, some particular local paralinguistic or vocal deviations in an utterance, such as an emphasis on a word or term, may be optimally rendered to the user.

According to a particular embodiment, formatting at least a part of the textual information 205 transcribing the utterance using the adaptive font 213 determined by the adaptive font generation unit 219 for display to a user may additionally comprise adding one or more specific terms or expressions in the textual information describing some oral characteristics characterized by the plurality of feature parameters. For instance, the one or more specific terms or expressions may correspond to added closed captions describing in writing a paralinguistic feature detected in the utterance (e.g. a laughter). The one or more specific terms or expressions may be formatted using the adaptive font.

In some embodiments, the font source 223 may be configured to provide the predefined font, the plurality of proxy fonts, the set of labelled fonts, set of derived reference fonts or the custom font of the different adaptive font generation techniques described above. In some examples, the fonts 215 provided by the font source comprise fonts configured to illustrate specific vocal features or combinations of vocal features.

In an example, the font source 223 may be a repository of fonts, e.g. a local or remote storage of fonts. Some of the fonts of the font source 223 may correspond to empirically developed fonts. However, additionally or as an alternative, the font source 223 may comprise a predefined font generation unit (not shown) configured to generate some fonts using a labelling process and a cluster analysis based on one or more basis fonts or one or more basis designs. In an embodiment, this may involve using another trained model (e.g a deep learning model).

According to some embodiments, the control unit 115 of the computing system 100 (see Fig. 1) is configured to provide control signals 109 to the font processing system 111 (e.g. 200 in Fig. 2). In an embodiment, the control signals 109 (e.g. 209 in Fig. 2) may be configured to control the generation of the adaptive font 213 according to e.g. user settings and/or preferences. For instance, in an embodiment, a specific user interface such as a configuration menu may be provided to the user during operation to enable the user to select the nature of augmentations that the adaptive font 213 should provide. For instance, in a preferred embodiment, the specific user interface comprises a first user interface element (e.g. a button or switch) to activate or deactivate augmentations associated with paralinguistic features of the utterances (e.g. augmentations corresponding to emotions detected therein), a second user interface element to activate or deactivate augmentations associated with linguistic features of the utterances (e.g. augmentations characterizing a particular language and/or accent detected in the utterances), and/or a third user interface element to activate or deactivate augmentations associated with voice characteristics of the utterances (e.g. augmentations representing one or more prosodic features, e.g. loudness, speech rate etc. detected in the utterances). Hence, the user is able to easily configure the augmentations to be provided.

### EXEMPLARY METHOD

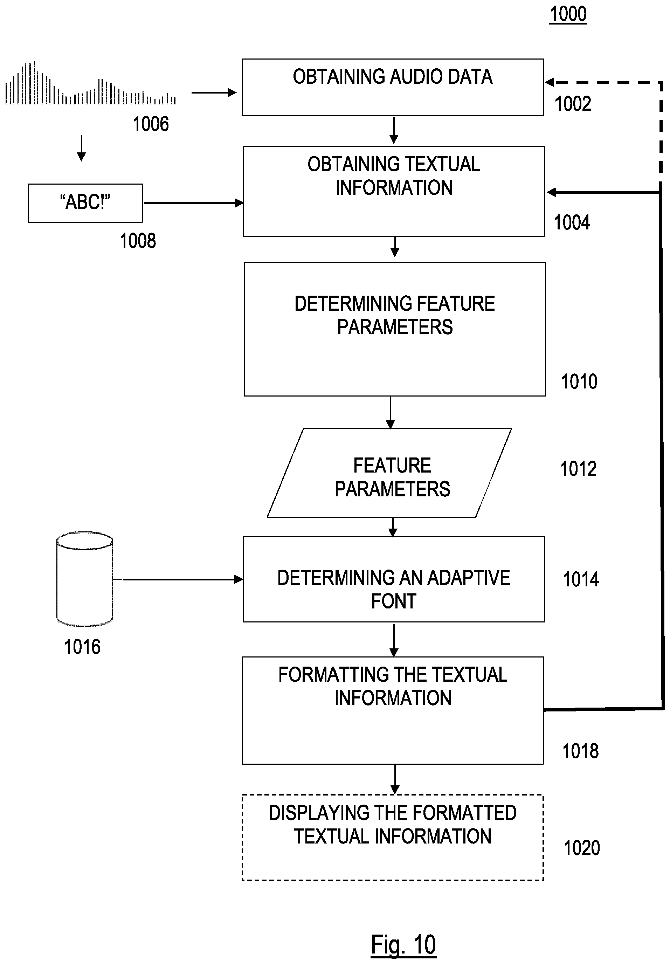

Fig. 10 corresponds to a flow diagram representing a method 1000 performed by a computing system, such as computing system 100 of Fig. 1, or particularly the processing system 119 of Fig. 1 (and particularly font processing system 111). It may be embodied using one or more software modules, one or more hardware modules or any combination thereof. For instance, it may be implemented at least in part using an extension, e.g a browser extension, pluggable to any media output device or media output software or application. It may be executed on a user computing device, on a remote computing device (e.g. cloud) or on any combination thereof. In particular, all steps described below may correspond or refer to functionalities or actions described above in detail with any of Fig. 1-9 and any entity thereof. Conversely, any details provided in the following may equally apply to the computing system 100 (and particularly to the font processing system 111, 200) described above.

The method 1000 may begin with step 1002, consisting of obtaining audio data 1006 (e.g. audio data 101 or 201). For instance, font processing system 111, 200 receives audio data 1006 from any audio-video content (e.g. a movie, a video stream) or a pure audio content (e.g. an audio stream, a phone call). In an embodiment, the audio data 1006 particularly contains vocal content (speech, song etc.) and may encode a series of utterances from one or more vocal sources (e.g speakers, singers or characters).

Further, the method 1000 may continue with step 1004 consisting of obtaining textual information 1008 (e.g. textual information 105 or 205) transcribing an utterance comprised in the audio data 1006 (e.g. at least one subtitle or closed captions). In some embodiments, this is performed by the font processing system 111, 200, which may obtain the textual information 1008 directly with the audio data 1006 (e.g. as a side channel, e.g. a subtitle/closed captions channel, provided with an audio stream or an audio/video stream). In another embodiment, the textual information 1008 may be obtained using a transcribing unit 121 based on the audio data 1006 and then fed to the font processing system 111, 200. In an example, the textual information 1008 may be particularly associated with a respective utterance of the audio data 1006 and may be part of a stream of textual information 1008 provided along the audio data 1006 to transcript a plurality of utterances of the audio data 1006. Alternatively, it may be part of a file (e.g. a text file) comprising a plurality of textual information 1008 associated with corresponding utterances of the audio data 1006.

The method 1000 may continue with step 1010 consisting of determining for the utterance, using a trained model, a plurality of feature parameters 1012 (e.g. 211) associated with a plurality of vocal features. In some embodiments, step 1010 corresponds to functionalities particularly performed by the speech analysis unit 217 of the font processing system 111, 200. As a result of step 1010, the plurality of feature parameters 1012 characterizing the utterance currently processed is delivered.

The method 1000 may continue with step 1014 consisting of determining an adaptive font 213 based on the plurality of feature parameters 1012, wherein at least one aspect of the adaptive font is adapted based on at least one of the plurality of feature parameters 1012. This step may be particularly performed by the adaptive font generation unit 219 of the font processing system 111, 200 and e.g. according to a variable font generation technique (see unit 219a), according to a discrete value generation technique (see unit 219b) or according to a custom font modifying technique (see unit 219c), or according to an AI-based generation technique (see unit 219d) as described above. In some examples, step 1014 may particularly involve the usage of remote computing or storage resources, e.g. a cloud server, to determine the adaptive font 213.

Finally, the method 1000 may continue with step 1018 consisting of formatting at least a part of the textual information 1008 using the adaptive font 213 for display to a user. The result of the step is a formatted textual information 107, 207 suitable for display to a user and comprising the augmentations achieved by the adaptive font 213. It is referred to the details recited above, especially regarding the font application unit 221 of the font processing system 111, 200. In some cases, the full textual information 1008 is formatted using the adaptive font 213. In some other cases, as explained above, at least a part of it is formatted using a respective modified adaptive font based on an associated local plurality of feature parameters, in order to optimally render local paralinguistic or vocal deviations in an utterance, such as an emphasis on a word or term.

In a particularly preferred embodiment, steps 1004, 1010, 1012, 1014, and 1018 may be repeated as many times as required, e.g. as long as any new utterance is detected and/or obtained from the audio data 1006. In some embodiment, the process may even return to step 1002 to obtain new/further audio data 1006. Accordingly, a continuous speech comprised in the audio data 1006 may be processed, e.g. at runtime, to provide a corresponding series of formatted textual information 107, 207 transcribing a corresponding series of utterances of vocal content.

In an embodiment, the method 1000 may further comprise a step of displaying 1020 the formatted textual information 107, 207 to the user on a display (e.g. the output device 113). For instance, it may be displayed as a subtitle on output display 113.

Moreover, in yet another embodiment, the method 1000 may further comprise a step of receiving control signals 109, 209 to control the determining of the adaptive font 213 based on user settings and/or preferences. For instance, as explained above with Fig. 1 or 2, this step may comprise receiving, via a user interface displayed to the user, a first control signal (e.g. using a first user interface element) to activate or deactivate augmentations associated with paralinguistic features of the utterances, a second control signal (e.g. using a second user interface element) to activate or deactivate the augmentations associated with linguistic features of the utterances, and/or a third control signal (e.g. using a third user interface element) to activate or deactivate the augmentations associated with voice characteristics of the utterances. In a preferred embodiment, this user interface may be part of a user interface for controlling subtitle settings (e.g. language settings) and may also be implemented using a specific extension, e.g. a browser extension.

### OTHER USE CASE FOR ADAPTIVE FONT DEVELOPMENT

Further to the above presented embodiments, a user interface is contemplated which provides a display of fonts which represents a calculated effect on a viewer or a linguistic category. In some examples, this provision is based on one or more manual assignment or settings provided by a chat user, a publisher, an author within a chat room, and/or for digital and analogue (print) media. In an embodiment, the user interface may comprise further functionalities to configure some visual aspects such as a color, or an animation and the like.

In some examples, this user interface is configured to define assignments of the fonts, or certain font associations for one or more persons, organizations, a company (as part of its corporate identity), and/or for products, text messages, designs or campaigns. Such definitions may be performed based on manual assignment(s) or using an algorithmic cluster analysis. This user interface aims at assigning one or more intended effects (e.g. an intended paralinguistic effect, such as an association with joy or association with technical progress) e.g. based on some assumed effect(s) of the font on a viewer. In an embodiment, the one or more intended effects of the design may be determined based on a text input (e.g. a product description or website) by means of an algorithmic analysis and some language models.

### USE CASE FOR ADAPTIVE FONT GENERATION

In the following, a further representative case of adaptive font generation and usage is disclosed.

For instance, some embodiments of the present disclosure can be defined by the following examples. Moreover, embodiments or aspects of the present disclosure can be combined with the following examples in any combination.

Example 1. A method in which, for an optically displayed background or film, spoken is visually displayed by a font, characterised in that at least one vocal feature or phonetic feature of the voice speaking the spoken is visually displayed in graphically displayed font by using a respective optical presentation of the font associated with the respective vocal feature or phonetic feature.

Example 2. A method according to example 1, characterised in that several or different vocal features or phonetic features are displayed by different typographies or typographic presentations of fonts for the font.

Example 3. A method according to example 1 or 2, characterised in that complete sentences are displayed by the font.

Example 4. A method according to any one of the preceding examples, characterised in that differently presented fonts are used for the font for the visual display of different national languages, accents, sociolects or dialects.

Example 5. A method according to any one of the preceding examples, characterised in that differently presented fonts for the font for the visual display of temporally changing vocal features or phonetic features chronologically follow one another.

Example 6. A method according to any one of the preceding examples, characterised in that the volume profile of a voice is displayed by fonts for the font, wherein at least one character presented in a specific manner is associated with a specific volume or a volume range.

Example 7. A method according to any one of the preceding examples, characterised in that the speech speed of a voice is displayed by a font for the font, wherein at least one character presented in a specific manner is associated with a specific speech speed.

Example 8. A method according to any one of the preceding examples, characterised in that spatial hearing is simulated by the orientation of the font by associating the font with a respective image edge at which a respective stereophonic sound source emits audio signals into a space.

Example 9. A method according to any one of the preceding examples, characterised in that a paralinguistic feature of the voice which is connected to the emotional expression of a speaking figure is displayed by font, wherein at least one specific presentation of the characters is associated with a specific emotional expression.

Example 10. An arrangement by means of which a method according to any one of the preceding examples can be carried out or is carried out, wherein the arrangement comprises a medium, wherein the medium displays how an algorithm carried out by a device converts audio signals of the medium, which are emitted into a space in parallel with at least one background optically displayed by the medium, into optically displayed characters, wherein at least one acoustic or physical feature of the audio signal is optically displayed on the medium by an optical structure of one or more characters associated with the respective feature.

A preferred embodiment relates to a method according to the preamble of example 1 and an arrangement for carrying out the method.

Further details are provided below.

It is known to provide films with subtitles in order to convey content of the film to hearing-impaired persons or people who do not understand the spoken language of the film. In order to visually display the spoken, fonts which are as neutral as possible are currently used. Low-feature font groups such as grotesques or monospaces could be used as fonts in relation to the German-speaking space.

With the known subtitles, however, voice-language situations of a film or the mood and language characteristics of an actor, in particular his emotions, cannot be displayed since only language content is communicated.

The preferred embodiment is therefore based on the object of visually displaying sound events of spoken or information conveyed by audio signals.

The preferred embodiment achieves the aforementioned object by the features of example 1.

According to the preferred embodiment, it has first been recognised that font, in particular as a subtitle, has hitherto been a very one-dimensional experience because the spoken language is often only displayed by neutral, low-feature fonts.

It has further been recognised that a specific representation of font has to be used in order to give the purely optically displayed image or film a versatility and proximity.

Specifically, it has been recognised against this background that at least one vocal feature of a voice speaking the language has to be visually displayed in graphically displayed font by using an optical presentation of the font associated with the respective vocal feature.

By means of the respective presentations, basic movements such as grief, fear, anger or joy, but also affection or rejection can be displayed and optically transported.

According to the invention, the font used adapts to the phonetics of the spoken. Thus, hearing-impaired people are enabled to participate more in language culture and all to have a deeper reading experience.

By means of the described method, sound events of spoken language can be visually displayed. Various language aspects can be visually translated.

Several or different vocal features or phonetic features could be displayed by different typographies or typographic presentations of fonts for the font. Thus, it is possible, for example, to display hard tones by hard-looking letters and to display soft tones by soft-looking letters. Hard language sections could, for example, be angular or be displayed by angular letters or have pointed shapes or be displayed by pointed letters, whereas soft language sections are more likely to be rounded off or displayed smoothly by corresponding letters. The presentation of the letters transports the respective characteristic of the spoken language.

Complete sentences could be displayed by the font. In contrast to a visually-specific display of only individual words, entire sentences can more completely display emotional or acoustic progressions of a voice, and the reading flow is preserved. Moreover, the voices of different persons can be more clearly associated with the respective speaking persons if differently presented fonts are used for the respective font for different voices.

Differently presented fonts could be used for the font for the visual display of different national languages or dialects. For example, for the display of a national language, a typography could be used which reminds the viewer of the respective country because the typography integrates symbols and fonts characteristic of the country into the letters. Sociolects, individual language errors or accents could also be visually displayed by the typography of the respective font.

Differently presented fonts for the font could temporally follow one another for the visual display of temporally changing vocal features or phonetic features. Specifically, the presentation of letters could change in the course of the sentence while these letters are displayed temporally one after the other. For example, a spoken sentence can begin with letters of a first presentation and end with letters of a second or further presentation. Thus, it can be displayed that a voice first speaks without accents and then with accents. Letters could be superimposed temporally one after the other in order to display the spoken sentence, wherein the presentation of the successively superimposed letters changes. Thus, for example, the change in a vocal feature, for example the volume, occurring at this moment can be visually displayed.

The volume profile of a voice could be displayed by fonts for the font, wherein at least one character presented in a specific manner is associated with a specific volume or a volume range. Thus, it can be displayed by specific characters that a voice speaks just loud or quiet. Specifically, for example, the line thickness of the letters used can increase in order to increase the volume.

The sound colour of a voice could be displayed by fonts for the font, wherein at least one character presented in a specific manner is associated with a specific frequency range. Thus, it can be displayed by specific characters that a voice speaks just dark or light.

Fonts for the font could smoothly merge into one another. An interpolation of different fonts, namely a smooth transition from one font to the other, could take place in the context of several auditory features occurring at the same time within a typographic display. Thus, for example, a quiet Spanish anger could be visually displayed by an interpolation of different fonts. For example, a spoken sentence could visually reproduce both volume, emotion and a linguistic aspect.

The speech speed of a voice could be displayed by a font for the font, wherein at least one character presented in a specific manner is associated with a specific speech speed. Thus, it can be displayed by specific characters that a voice speaks just hectically, presses or stones.

Spatial hearing could be simulated by the orientation of the font by associating the font with the respective image edge of a screen at which the respective stereophonic sound source emits audio signals into a space. Thus, for example, the font can be arranged to be left-aligned if a left-hand loudspeaker is emitting audio signals, and the font could be arranged to be right-aligned if a right-hand loudspeaker is emitting audio signals. The spatial sound distribution can thus be visually displayed to a hearing-impaired person.

A paralinguistic feature of the voice which is connected to the emotional expression of a speaking figure could be displayed by font, wherein at least one specific presentation of the characters is associated with a specific emotional expression. As a vocal feature or phonetic feature, a basic movement, in particular grief, fear, anger, joy, affection or rejection, could be displayed and optically transported by a font for the font. For example, a graphical symbol which is associated with a basic movement could be integrated into a font. Such a symbol could be, for example, a tear which is associated with the basic movement grief.

Specific presentation of the font within the meaning of this description is understood to mean a specific optical appearance of a character, but also possibly used pictograms, punctuation and special characters.

By means of an arrangement which comprises a medium, a method of the type described here could be carried out.

The arrangement could comprise a medium which displays how an algorithm carried out by a device converts audio signals of the medium, which are emitted into a space in parallel with at least one background optically displayed by the medium, into optically displayed characters. At least one acoustic or physical feature of the audio signal could be optically displayed on the medium by an optical structure of one or more characters associated with the respective feature.

Specifically, the medium could be configured as a television, laptop, computer, screen in bus, train or train, or as a mobile telephone. Thus, the auditory content of films or images can be explained with font which transports the phonetics of the explained.

The following further possibilities and aspects for or when carrying out the method described here are to be optionally disclosed:

A method is disclosed which uses representative screen-optimized font sections in order to enable a barrier-free mediation of spoken language culture by typography. With the aid of this method, the one-dimensional medium font is enriched for versatility and proximity and phonetic information previously inaccessible to hearing-impaired persons is transcribed. The use in subtitles results in a deeper film experience.

A method for visualizing attributes which audibly have a speech process is disclosed by the automated use of representative font sections of different microtypographic design.

The method simplifies, in particular hearing-impaired persons, the participation in the language culture by the depicted font, for example in subtitles of audiovisual media, providing information about the phonetic features of spoken language.

A collection of auditory stimuli is linked according to a defined pattern with visual stimuli by individual ones of the auditory signals being linked by a a) symbolism (meaning) or b) physical linking or c) specific association (object/idea identification) or d) intermodal analogy (correlation of the features) or e) observations of generic synaesthetic perception phenomena, with the microtypography and thus form the idea of the recipient.

The language aspects to be taken into account advantageously include a) the constant phonetic features of different national languages, accents, dialects or sociolects and b) constant and temporary individual vocal features (e.g. speech speed, volume, height, emphasis) and c) temporary emotional expression (paralanguage).

The language units which use the method are primarily sentences and, in individual cases, individual words in order to preserve a uniform design and readability.

Language sections which have a high consonant density, including in particular fricatives and plosives, and a strong emphasis of these consonants are expressed by an angular and more pointed shape than language sections which look soft and have many vowels, and a high emphasis of these vowels. These are displayed rounded and curved.

Increasing volume can correspond to increasing font strength. Increasing speech speed can correspond to decreasing font width. Increasing pitch can correspond to increasing upper length.

Passive emotions are displayed by font inclined against the reading direction, active emotions are displayed by font inclining with the reading direction. Positive emotions are displayed by upwardly oriented and negative emotions by downwardly oriented font.

Orientation means the orientation of individual letter elements, a corresponding line guidance and in part the use of corresponding serifs. The common angle of a spring of 45° expresses harmony and any deviating angle, increasing according to the deviation, expresses disharmony.

A uniform line strength contrast represents balance. High line strength contrast represents unbalance. Letters imitate mimics and gestures which are usually connected to emotions. Symbols, such as tears for grief, are also incorporated into the letters. The statics of the letters reflect the emotional stability of the speakers. Disharmony is expressed by a break with visual habits. The character distance coincides with the density of sounds.

Voice-language peculiarities, e.g. "rolled R" or "silent h", of individual letters in the respective language context, e.g. accents or language errors, are reflected in the respective character in a typographically translated form. Individual glyphs recall the fonts or fonts, e.g. Cyrillic, preferably used in the home country of the language. Sounds of sounds deviating from the norm are expressed by an end of the glyph-pointing in the corresponding direction.

A simulation of spatial hearing is simulated by the orientation of the font or of the text at the image edge of the corresponding stereophonic sound source.

According to one use case, a screen on which an image or an image sequence is displayed as background, wherein the spoken for the image or the image sequence is visually displayed and wherein the spoken is emitted by a loudspeaker into a space by audio signals.

The use case shows an arrangement by means of which a method of the type described below is carried out.

The arrangement comprises a medium, wherein the medium displays how an algorithm carried out by a device converts audio signals of the medium, which are emitted into a space temporally in parallel with at least one background optically displayed by the medium, specifically an image, into optically displayed characters.

At least one acoustic or physical feature of the audio signal is optically displayed on the medium by an optical structure of one or more characters associated with the respective feature.

The medium is here specifically a television on which a method of the type below is carried out.

The television has a screen on which a scene of a film or an image is displayed, to which a voice the spoken visually displayed by font in the subtitle speaks.

The audio signal, namely the voice that the spoken speaks, is schematically displayed and is emitted as an acoustic signal by a loudspeaker into the space in which the medium is located. The acoustic signal is visually visualised by means of the method as follows.

In the method, spoken is visually displayed for the image by visually displaying at least one vocal feature or phonetic feature of the voice speaking the spoken in graphically displayed font. Specifically, a respective optical presentation of the font associated with the respective vocal feature or phonetic feature is used.

Several or different vocal features or phonetic features are displayed by different typographies or typographic presentations of fonts for the font in the subtitle. A complete sentence is displayed by the font.

The volume profile of a voice is displayed by fonts for the font, wherein at least one character presented in a specific manner is associated with a specific volume or a volume range.

The fonts specified by the algorithm for the font of the words "thicker", "thinner", "broader", "narrower", "anxious" and "raging" express that the voice has a specific phonetic feature during the speaking of the respective word.

The speech speed of a voice is displayed by a font for the font in the subtitle, wherein at least one character presented in a specific manner is associated with a specific speech speed.

The medium described here displays how the device 6 converts by means of the algorithm audio signals of the medium, namely the voice, which are emitted into a space linked to the background optically displayed in the medium, namely to the image, into optically displayed characters, namely the subtitle.

At least one acoustic or physical feature of the audio signal, namely a linguistic or vocal feature, is optically displayed on the medium by an optical structure associated with the respective feature, namely an optical presentation, of one or more characters.

In this respect, a method is carried out by means of the arrangement in which spoken is visually displayed for the image by visually displaying at least one vocal feature or phonetic feature of the voice speaking the spoken in graphically displayed font. Specifically, a respective optical presentation of the font associated with the respective vocal feature or phonetic feature is used.

### EXEMPLARY COMPUTING SYSTEM

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions, encoded on a computer program carrier, for execution by, or to control the operation of, data processing apparatus. For example, a computer program carrier can include one or more computer-readable storage media that have instructions encoded or stored thereon. The carrier may be a tangible non-transitory computer-readable medium, such as a magnetic, magneto optical, or optical disk, a solid state drive, a random access memory (RAM), a read-only memory (ROM), or other types of media. Alternatively, or in addition, the carrier may be an artificially generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

Processors for execution of a computer program include, by way of example, both general- and special-purpose microprocessors, and any one or more processors of any kind of digital computer. Generally, a processor will receive the instructions of the computer program for execution as well as data from a non-transitory computer-readable medium coupled to the processor.

The term "data processing apparatus" encompasses all kinds of apparatuses, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

The processes and logic flows described in this specification can be performed by one or more computers or processors executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will also include, or be operatively coupled to receive data from or transfer data to one or more storage devices. The storage devices can be, for example, magnetic, magneto optical, or optical disks, solid state drives, or any other type of non-transitory, computer-readable media. However, a computer need not have such devices. Thus, a computer may be coupled to one or more storage devices, such as, one or more memories, that are local and/or remote. For example, a computer can include one or more local memories that are integral components of the computer, or the computer can be coupled to one or more remote memories that are in a cloud network. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Components can be "coupled to" each other by being commutatively such as electrically or optically connected to one another, either directly or via one or more intermediate components. Components can also be "coupled to" each other if one of the components is integrated into the other. For example, a storage component that is integrated into a processor (e.g., an L2 cache component) is "coupled to" the processor.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While this specification contains many specific embodiment details, these should not be construed as limitations on the scope of what is being claimed, which is defined by the claims themselves, but rather as descriptions of features that may be specific to particular embodiments. Certain features that are described in this specification in the context of separate embodiments can also be realized in combination in a single embodiment. Conversely, various features that are described in the context of a single embodiments can also be realized in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

While some embodiments have been described in detail, it is to be understood that aspects of the disclosure can take many forms. In particular, the claimed subject matter may be practiced or implemented differently from the examples described, and the described features and characteristics may be practiced or implemented in any combination. As one example, the processes depicted in the accompanying figures do not necessarily require the particular order shown, or sequential order, to achieve desirable results. In some cases, multitasking and parallel processing may be advantageous. The embodiments shown herein are intended to illustrate rather than to limit the invention as defined by the claims.

### EXEMPLARY ASPECTS

Embodiments of the present disclosure may be defined by one or more of the following aspects, in any combination.

Aspect 1: A computer-implemented method, comprising: obtaining audio data; obtaining textual information transcribing an utterance comprised in the audio data; determining for the utterance, using a trained model, a plurality of feature parameters associated with a plurality of vocal features; determining an adaptive font based on the plurality of feature parameters, wherein at least one aspect of the adaptive font is adapted based on at least one of the plurality of feature parameters; and formatting at least a part of the textual information using the adaptive font for display to a user.

Aspect 2. The method according to aspect 1, wherein the utterance is characterized by the plurality of features parameters.

Aspect 3. The method according to aspect 1 or 2, wherein the plurality of feature parameters comprises at least one of: one or more paralinguistic parameters associated with one or more paralinguistic features, one or more phonetical parameters associated with one or more phonetical features, and/or one or more voice parameters associated with one or more voice characteristics.

Aspect 4. The method according to aspect 3, wherein the one or more paralinguistic parameters comprise one or more parameters associated with one or more candidate emotions, each representing an estimation indicating whether the utterance exhibits a respective candidate emotion.

Aspect 5. The method according to aspect 4, wherein the one or more candidate emotions comprise one or more of anger, joy, fear, and/or grief.

Aspect 6. The method according to any one of the aspects 3 to 5, wherein the one or more phonetical parameters relate to linguistic characteristics comprising one or more of: a parameter indicating a detected language of the utterance, a parameter indicating a detected accent of the utterance, one or more confidence levels for one or more candidate languages, each indicating a confidence level that the utterance is in a respective candidate language, and/or one or more confidence levels associated with one or more candidate accents, each indicating a confidence level that the utterance exhibits a respective candidate accent.

Aspect 7. The method according to any one of the aspects 3 to 6, wherein the one or more voice parameters associated with the one or more voice characteristics comprises one or more of: a parameter indicating a loudness level of the utterance, a parameter indicating a speech rate of the utterance, and/or a parameter indicating a pitch of the utterance.

Aspect 8. The method according to any one of the preceding aspects, wherein the plurality of feature parameters is stored as a plurality of values of a vector, preferably stored in an array or a matrix.

Aspect 9. The method according to any one of the preceding aspects, wherein the trained model is a speech emotion recognition model and comprises at least one of a machine learning model, a deep learning model, a large language model and/or a natural language processing, NLP, model.

Aspect 10. The method according to any one of the preceding aspects, wherein said determining for the utterance, using the trained model, the plurality of feature parameters comprises: extracting one or more audio features from a portion of the audio data associated with the utterance; inputting the portion of the audio data and the one or more audio features into the trained model; and obtaining the plurality of feature parameters from the trained model.

Aspect 11. The method according to any one of the preceding aspects, further comprising: identifying one or more significant vocal features for the utterance based on the plurality of feature parameters, wherein the one or more significant vocal features and their one or more respective determined feature parameters in the plurality of feature parameters are representative of the utterance; wherein determining the adaptive font based on the plurality of feature parameters comprises determining the adaptive font based on the one or more determined feature parameters of the one or more significant vocal features.

Aspect 12. The method according to aspect 11, wherein the one or more significant vocal features is associated with one or more respective predetermined types of adaptations; wherein determining the adaptive font based on the one or more determined feature parameters of the one or more significant vocal features comprises applying the one or more predetermined types of adaptations based on the one or more determined feature parameters of the one or more significant vocal features.

Aspect 13. The method according to aspect 12, further comprising: determining, for each significant vocal feature of the one or more significant vocal features, an application factor of the predetermined type of adaptation for the significant vocal feature based on the determined feature parameter associated with the significant vocal feature, wherein applying the one or more predetermined types of adaptations based on the one or more determined feature parameters of the one or more significant vocal features comprises applying the one or more predetermined types of adaptations to a predefined font in proportions correlated with the application factors of the one or more predetermined types of adaptations to generate the adaptive font.

Aspect 14. The method according to aspect 13, wherein, for each significant vocal feature of the one or more significant vocal features, the application factor of the respective predetermined type of adaptation is correlated with the determined feature parameter of the significant vocal feature.

Aspect 15. The method according to aspect 13 or 14, wherein, for each significant vocal feature of the one or more significant vocal features, the application factor of the respective predetermined type of adaptation is on a scale having a minimum value and a maximum value, the minimum value indicating a first degree of application of the predetermined type of adaptation and the maximum value a second degree of application of the predetermined type of adaptation.

Aspect 16. The method according to any one of the aspects 13 to 15, wherein the predefined font is a variable font having on or more aspects progressively adaptable.

Aspect 17. The method according to any one of the aspects 13 to 16, wherein the one or more significant vocal features comprises a plurality of significant vocal features having an associated plurality of predetermined types of adaptations, wherein applying the one or more predetermined types of adaptations to the predefined font in proportions correlated with the application factors of the one or more predetermined types of adaptations comprises applying each predetermined type of adaptation of the plurality of predetermined types of adaptations to the predefined font in a proportion correlated with the respective application factor of the predetermined type of adaptation.

Aspect 18. The method according to any one of the aspects 13 to 17, wherein the one or more significant vocal features comprises a first vocal feature from a paralinguistic feature category and associated with a first type of adaptation, for which a first application factor is determined based on the determined feature parameter associated with the first vocal feature in the plurality of feature parameters, wherein applying the one or more predetermined types of adaptations to the predefined font in proportion correlated with the application factors of the one or more predetermined types of adaptations comprises applying the first type of adaptation to the predefined font in a proportion correlated with the first application factor.

Aspect 19. The method according to aspect 18, wherein the first vocal feature is activeness and the first type of adaptation is to tilt the posture of one or more characters of the predefined font in a direction corresponding to the reading direction.

Aspect 20. The method according to aspect 18, wherein the first vocal feature is a candidate emotion of type fear and the first type of adaptation is to tilt the posture of one or more characters of the predefined font in a direction opposite to the reading direction.

Aspect 21. The method according to any one of the aspects 1 to 10, wherein determining the adaptive font based on the plurality of feature parameters comprises selecting a proxy font from a plurality of proxy fonts as the adaptive font based on the plurality of feature parameters.

Aspect 22. The method according to aspect 21, wherein the plurality of proxy fonts corresponds to a plurality of predetermined fonts, wherein each font of the plurality of proxy fonts is associated with a respective set of predetermined values for the feature parameters for the plurality of vocal features.

Aspect 23. The method according to aspect 22, wherein selecting the proxy font from the plurality of proxy fonts as the adaptive font based on the plurality of feature parameters comprises selecting the proxy font from the plurality of proxy fonts, the set of predetermined values of which is the closest to the plurality of feature parameters.

Aspect 24. The method according to aspect 21, wherein the plurality of proxy fonts corresponds to a plurality of predetermined fonts generated at least for a range of discrete values for each of the one or more feature parameters of the one or more significant vocal features, wherein each proxy font is associated with a particular combination of discrete values forming a respective set of proxy coordinates, wherein selecting the proxy font from the plurality of proxy fonts as the adaptive font based on the plurality of feature parameters comprises selecting the proxy font from the plurality of proxy fonts, the set of proxy coordinates of which is the closest to the one or more determined feature parameters of the one or more significant vocal features.

Aspect 25. The method according to any one of the aspects 1 to 10, wherein determining the adaptive font based on the plurality of feature parameters comprises generating the adaptive font using a further trained model and based on the plurality of feature parameters.

Aspect 26. The method according to aspect 25, wherein the further trained model is a model trained on a set of labelled fonts each representative of some particular vocal features to determine reference associations between a set of combinations of values for the plurality of feature parameters and respective sets of derived reference fonts, wherein generating the adaptive font using the further trained model and based on the plurality of feature parameters comprises: generating the adaptive font based on the plurality of feature parameters and the reference associations.

Aspect 27. The method according to aspect 26, wherein generating the adaptive font based on the plurality of feature parameters and the reference associations comprises applying, to one or more fonts from the set of derived reference fonts: one or more adaptations of one or more microtypographical aspects or one or more microtypographical elements; one or more adaptations of one or more macrotypographical aspects or one or more macrotypographical elements; one or more adaptations of one or more display characteristics or one or more display elements; and one or more adaptations of one or more dynamic characteristics.

Aspect 28. The method according to aspect 26 or 27, wherein generating the adaptive font based on the plurality of feature parameters and the reference associations comprises generating the adaptive font based on the plurality of feature parameters and the reference associations and using either a stable diffusion process or a character skeleton mapping process.

Aspect 29. The method according to aspect 11, wherein determining the adaptive font based on the one or more determined feature parameters of the one or more significant vocal features comprises applying one or more custom types of adaptations to a custom font based on the one or more determined feature parameters of the one or more significant vocal features.

Aspect 30. The method according to aspect 29, wherein the one or more custom types of adaptations are defined according to one or more custom rules for the custom font.

Aspect 31. The method according to any one of the aspects 13 to 30, wherein the predefined font, the plurality of proxy fonts, the set of labelled fonts, set of derived reference fonts or the custom font are obtained from a font source.

Aspect 32. The method according to aspect 31, wherein some fonts of the font source are generated using a labelling process and a cluster analysis based on one or more basis fonts or one or more basis designs.

Aspect 33. The method according to any one of the preceding aspects, wherein the utterance is a unit of speech.

Aspect 34. The method according to aspect 33, wherein the plurality of feature parameters associated with the plurality of vocal features determined for the utterance corresponds to a first plurality of feature parameters, and wherein the method further comprises determining one or more subunits of speech in the unit of speech having a second respective plurality of feature parameters substantially deviating from the first plurality of feature parameters with respect to at least one vocal feature; and determining a modified adaptive font for the one or more subunits of speech based on a quantified deviation between the second respective plurality of feature parameters and the first plurality of feature parameters, wherein formatting the at least one part of the textual information based on the adaptive font for display to the user comprises formatting one or more parts of the textual information corresponding to the one or more subunits of speech using the modified adaptive font.

Aspect 35. The method according to any one of the preceding aspects, wherein determining the adaptive font based on the plurality of feature parameters comprises one or more of the following: adapting the typeface of a predefined font to be bold when one or more feature parameters from the plurality of feature parameters indicate that a loudness level of the utterance is high, adapting the typeface of a predefined font to be thin when one or more feature parameters from the plurality of feature parameters indicate that a loudness level of the utterance is low, decreasing a character spacing and/or a character width of a predefined font when one or more feature parameters from the plurality of feature parameters indicate that a speech rate of the utterance is high, increasing a character spacing and/or a character width of a predefined font when one or more feature parameters from the plurality of feature parameters indicate that a speech rate of the utterance is low, tilting a posture of a predefined font in a direction corresponding to the reading direction when one or more feature parameters from the plurality of feature parameters are representative of a significant presence of activeness in the utterance, tilting a posture of a predefined font in a direction opposite to the reading direction when one or more feature parameters from the plurality of feature parameters are representative of a significant presence of passiveness in the utterance, adapting a vertical orientation of one or more characters of a predefined font by orienting the end of the one or more characters to the top when one or more feature parameters from the plurality of feature parameters are representative of a significant presence of joy or a positive emotion in the utterance, and adapting a vertical orientation of one or more characters of a predefined font by orienting the end of the one or more characters to the bottom when one or more feature parameters from the plurality of feature parameters are representative of a significant presence of grief or a negative emotion in the utterance.

Aspect 36. The method according to any one of the preceding aspects, wherein the method is for conveying oral characteristics of utterances of the audio data to deaf or hard-of-hearing persons.

Aspect 37. The method according to any one of the preceding aspects, further comprising determining the audio data from one or more of a video, an audio file, an audio broadcast, a call, a live audio event or a virtual audio event, or a video conference.

Aspect 38. The method according to any one of the preceding aspects, further comprising determining the audio data from a video and providing the formatted at least one part of the textual information as a subtitle of the video.

Aspect 39. One or more computing devices, comprising one or more processors configured to perform the method according to any one of the preceding aspects.

Aspect 40. One or more computer-readable storage media storing instructions thereon which, when executed by one or more processors, cause the one or more processors to carry out the method according to any one of aspects 1 to 38.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A computer-implemented method, comprising:
obtaining audio data;
obtaining textual information transcribing an utterance comprised in the audio data;
determining for the utterance, using a trained model, a plurality of feature parameters associated with a plurality of vocal features;
determining an adaptive font based on the plurality of feature parameters, wherein at least one aspect of the adaptive font is adapted based on at least one of the plurality of feature parameters; and
formatting at least a part of the textual information using the adaptive font for display to a user.

2. The method according to claim 1, wherein the utterance is **characterized by** the plurality of features parameters.

3. The method according to claim 1 or 2, wherein the plurality of feature parameters comprises at least one of:
one or more paralinguistic parameters associated with one or more paralinguistic features,
one or more phonetical parameters associated with one or more phonetical features, and/or
one or more voice parameters associated with one or more voice characteristics.

4. The method according to any one of the preceding claims, wherein the plurality of feature parameters is stored as a plurality of values of a vector, preferably stored in an array or a matrix.

5. The method according to any one of the preceding claims, further comprising:
identifying one or more significant vocal features for the utterance based on the plurality of feature parameters, wherein the one or more significant vocal features and
the one or more respective determined feature parameters in the plurality of feature parameters are representative of the utterance,
wherein determining the adaptive font based on the plurality of feature parameters comprises determining the adaptive font based on the one or more determined feature parameters of the one or more significant vocal features.

6. The method according to claim 5, wherein the one or more significant vocal features are associated with one or more respective predetermined types of adaptations, wherein determining the adaptive font based on the one or more determined feature parameters of the one or more significant vocal features comprises applying the one or more predetermined types of adaptations based on the one or more determined feature parameters of the one or more significant vocal features.

7. The method according to claim 6, further comprising:
determining, for each significant vocal feature of the one or more significant vocal features, an application factor of the predetermined type of adaptation for the significant vocal feature based on the determined feature parameter associated with the significant vocal feature,
wherein applying the one or more predetermined types of adaptations based on the one or more determined feature parameters of the one or more significant vocal features comprises applying the one or more predetermined types of adaptations to a predefined font in proportions correlated with the application factors of the one or more predetermined types of adaptations to generate the adaptive font.

8. The method according to claim 7, wherein, for each significant vocal feature of the one or more significant vocal features, the application factor of the respective predetermined type of adaptation is on a scale having a minimum value and a maximum value, the minimum value indicating a first degree of application of the predetermined type of adaptation and the maximum value a second degree of application of the predetermined type of adaptation.

9. The method according to any one of the claims 1 to 4, wherein determining the adaptive font based on the plurality of feature parameters comprises selecting a proxy font from a plurality of proxy fonts as the adaptive font based on the plurality of feature parameters.

10. The method according to any one of the claims 1 to 4, wherein determining the adaptive font based on the plurality of feature parameters comprises generating the adaptive font using a further trained model and based on the plurality of feature parameters.

11. The method according to claim 5, wherein determining the adaptive font based on the one or more determined feature parameters of the one or more significant vocal features comprises applying one or more custom types of adaptations to a custom font based on the one or more determined feature parameters of the one or more significant vocal features.

12. The method according to any one of the preceding claims, wherein the utterance is a unit of speech, the plurality of feature parameters associated with the plurality of vocal features determined for the utterance corresponds to a first plurality of feature parameters, and wherein the method further comprises:
determining one or more subunits of speech in the unit of speech having a second respective plurality of feature parameters substantially deviating from the first plurality of feature parameters with respect to at least one vocal feature; and
determining a modified adaptive font for the one or more subunits of speech based on a quantified deviation between the second respective plurality of feature parameters and the first plurality of feature parameters,
wherein formatting the at least one part of the textual information based on the adaptive font for display to the user comprises formatting one or more parts of the textual information corresponding to the one or more subunits of speech using the modified adaptive font.

13. The method according to any one of the preceding claims, wherein the method is for conveying oral characteristics of utterances of the audio data to deaf or hard-of-hearing persons.

14. The method according to any one of the preceding claims, further comprising determining the audio data from one or more of a video, an audio file, an audio broadcast, a call, a live audio event or a virtual audio event, or a video conference.

15. A computing device, configured to perform the method according to any one of the preceding claims.
